# EUROPÄISCHE PATENTSCHRIFT

(11) **EP 0 716 964 B1**
(45) Veröffentlichungstag und Bekanntmachung des Hinweises auf die Patenterteilung: **10.03.1999**
(21) Anmeldenummer: 95118030.6
(22) Anmeldetag: 16.11.1995
(51) Int. Cl.: B60S 1/34, B22D 19/02

(54) **Befestigungselement für Scheibenwischer sowie Verfahren und Vorrichtung zu seiner Herstellung**
Attachment element for a windscreen wiper, as well as method and apparatus for its manufacture
Tête d'entraînement pour essuie-glace, ainsi que procédé et dispositif pour sa fabrication

(30) Priorität: 13.12.1994 DE 4444328
(43) Veröffentlichungstag der Anmeldung: 19.06.1996
(73) Patentinhaber: ROBERT BOSCH GMBH, 70442 Stuttgart (DE)
(72) Erfinder: Wegener, Horst, Dipl.-Ing. (FH), D-71287 Weissach (DE)

(56) Entgegenhaltungen:
- EP-A- 0 209 276
- EP-A- 0 490 021
- EP-A- 0 584 018
- FR-A- 2 691 656

## Beschreibung

### Stand der Technik

Die Erfindung betrifft ein Befestigungselement für Scheibenwischer sowie ein Verfahren und eine Vorrichtung zu seiner Herstellung nach der Gattung des Hauptanspruchs. Befestigungselemente für Scheibenwischer, insbesondere Scheibenwischerarme bestehen häufig aus Zink oder einer Zinklegierung, die durch Druckgießen in einer Druckgießform hergestellt werden. Das Zink läßt sich hierbei sehr gut verarbeiten, schont das Druckgießwerkzeug und ermöglicht sehr gute Oberflächenqualitäten. Es hat sich jedoch herausgestellt, daß das Zink die Tendenz aufweist, in belasteten Bereichen im Laufe der Zeit das Gefüge zu ändern, wodurch sich eine Versprödung und damit eine erhöhte Bruchgefahr ergibt. Die Befestigung zwischen der mit einer Rändelstruktur versehenen antreibenden Achse und der Nabe des Scheibenwischerarms ist konisch ausgeführt, so daß beim Aufstecken des Scheibenwischerarms auf die Achse und Festziehen mit einer Mutter im Bereich der Nabe im Zink Spannungen auftreten und damit die Bruchgefahr steigt.

Es wurde bereits vorgeschlagen, in diesem Bereich ein belastbareres Material einzusetzen vgl. EP-A-584018, welches Dokument alle Merkmale des Oberbegriffs des Anspruchs 1 offenbart. Dies hat jedoch zur Folge, daß beim Festziehen die Rändelstruktur beschädigt und sich dadurch bei einer erneuten Montage, beispielsweise eines Auswechselteils, eine erhebliche Einbuße in der Kraftübertragung ergibt. Es wurde ferner vorgeschlagen statt Zink Aluminium oder Aluminiumlegierungen zu verwenden. Dies hat jedoch den Nachteil, daß Aluminium das Druckgießwerkzeug stark angreift und verschleißt, wodurch sich erhebliche Nachbearbeitungskosten ergeben. Aus der EP-OS 490 021 ist es bekannt, zum Herstellen von Bremstrommeln Verstärkungselemente in eine Form einzulegen, die dann mit geschmolzenem Eisen ausgegossen wird. Das Verstärkungselement liegt dabei an der Form lediglich reibschlüssig an. Da das Verstärkungselement Fortsätze aufweist, die sich bis zur Oberfläche der Bremstrommel erstrecken, ist es möglich, beim Herstellungsprozeß das Verstärkungselement in seiner Lage exakt zu fixieren.

### Vorteile der Erfindung

Das erfindungsgemäße Befestigungselement mit Merkmalen des Hauptanspruchs hat den Vorteil, daß das Material im Bereich bruch- und verwindungsgefährdeter Querschnitte, wie insbesondere im Nabenbereich, entlastet wird und deshalb entsprechend den Anforderungen an die gute Verarbeitbarkeit und das Herstellen optimaler Oberflächen ausgewählt werden kann. Da das Verstärkungselement Fortsätze aufweist, die sich bis mindestens zur Oberfläche des Körpers erstrecken ist es möglich, beim Herstellungsprozeß das Verstärkungselement in seiner Lage exakt zu fixieren, so daß auch im kritischen Nabenbereich enge Toleranzen eingehalten werden können.

Durch die in den Unteransprüchen aufgeführten Merkmale sind weitere vorteilhafte Ausführungen des Befestigungselements nach dem Hauptanspruch möglich. Insbesondere kann eine erhebliche Materialeinsparung und eine Querschnittsverkleinerung erreicht werden, wenn das Verstärkungselement sich über die gesamte Länge des Befestigungselements erstreckt. Auf diese Weise sind kleine schlanke Scheibenwischerarme realisierbar.

Besonders vorteilhaft ist es, wenn das Verstärkungselement im Querschnitt U-förmig ist, da dadurch eine Eigenstabilität und Verwindungssteifigkeit erzielt wird. Um ein formschlüssiges Verklammern des Werkstoffs des Körpers mit dem Verstärkungselement zu erreichen und um insbesondere das Aufschwinden oder Abschwinden des Werkstoffs des Grundkörpers vom Verstärkungselement zu mindern, kann das Verstärkungselement Durchbrüche wie Löcher oder Schlitze, vorteilhaft mit Kragen oder Durchzügen versehen sein. Auf diese Weise wird ein weiteres Verklammern des Werkstoffs des Grundkörpers mit dem Verstärkungselement erreicht. Dies ist besonders bei Zink oder Zinklegierungen wichtig, die mit dem Verstärkungselement beim Druckgießen keine metallische Verbindung eingehen.

Die Steifigkeit des Verstärkungselements kann durch Sicken, Dellen, Börtel oder ähnliche Einbringungen erheblich erhöht werden.

Durch das Trennen der Aufgaben - Aufnehmen der Belastungen im Betrieb einerseits und gute Verarbeitung und Formgebung andererseits - können die optimalen Werkstoffe ausgewählt werden. Es bietet sich für das Verstärkungselement ein Werkstoff hoher mechanischer Belastbarkeit, wie beispielsweise Stahl oder Stahllegierungen oder dergleichen und für den Werkstoff des Grundkörpers ein weicherer, gut form- und gießbarer Werkstoff wie Zink oder Zinklegierungen oder auch Aluminium oder dessen Legierungen an.

Ein Verfahren zum Herstellen eines Befestigungselements für Scheibenwischer, das einen Körper und ein sich im Körper seelenartig erstreckendes Verstärkungselement aufweist, zeichnet sich vorteilhaft dadurch aus, daß das Verstärkungselement in eine Druckgießform eingelegt wird, wobei am Verstärkungselement angebrachte Fortsätze in Aufnehmungen der Druckgießform aufgenommen werden. Beim folgenden Schließen der Druckgießform werden die Fortsätze in ihrer Lage festgelegt und das Verstärkungselement innerhalb der Druckgießform fixiert. Es kann somit nicht mehr ausweichen und der anschließend eingespritzte, den Körper bildende Werkstoff das Verstärkungselement umfließen und im Inneren aufnehmen. Nach dem Öffnen der Druckgießform wird das fertige Befestigungselement ausgeworfen.

Wenn die Fortsätze vorzugsweise konische Kragen aufweisen, mit denen sie in in die Aufnahmen eingebrachte Bohrungen im Druckgießwerkzeug eingelegt werden, ist eine sehr einfache und schnelle Zentrierung innerhalb des Werkzeugs möglich. Besonders vorteilhaft ist es, wenn in diesen Bohrung Auswerfer geführt werden. Dadurch ist erreicht, daß gegebenenfalls während des Spritzgießvorgangs, der unter sehr hohem Druck abläuft, austretendes Material, das in die Bohrungen einfließt beim Auswerfen ebenfalls aus der Form herausgeworfen wird. Dadurch bleiben die für die Zentrierung wichtigen Bohrungen sauber. Die aus dem Körper hervorstehenden Fortsätze können nach dem Spritzgießen entfernt werden, was besonders einfach durch Stanzen erreicht wird. Die Fortsätze sind somit von außen kaum sichtbar.

Eine zur Durchführung des erfindungsgemäßen Verfahrens besonders geeignete Vorrichtung, im folgenden Druckgießform genannt, zeichnet sich dadurch aus, daß Aufnahmen vorgesehen sind, in die die Fortsätze einlegbar und fixierbar sind. Diese Aufnahmen sind außerhalb der eigentlichen Fasson und gewährleisten ein Fixieren des Verstärkungselements dadurch, daß die in der Regel zweigeteilte Druckgießform beim Schließen der beiden Hälften die Fortsätze festspannt. Die Druckgießform weist bevorzugt Bohrungen auf, die in die Aufnahmen münden und in denen Auswerfer geführt werden. Dadurch ist eine optimale Zentrierung des Verstärkungselements und ein einfaches Auswerfen des fertigen Befestigungselements und ein Reinigen der Bohrungen möglich.

### Zeichnung

In der Zeichnung ist ein Befestigungselement sowie Varianten des Verstärkungselements und ein Teil einer erfindungsgemäßen Vorrichtung dargestellt und in der nachfolgenden Beschreibung näher erläutert. Es zeigen Figur 1 und 2 ein erfindungsgemäßes Befestigungselement teilweise im Schnitt von oben bzw. von der Seite, Figuren 3a bis e Varianten des Verstärkungselements und Figur 4 einen Ausschnitt einer erfindungsgemäßen Vorrichtung.

### Beschreibung

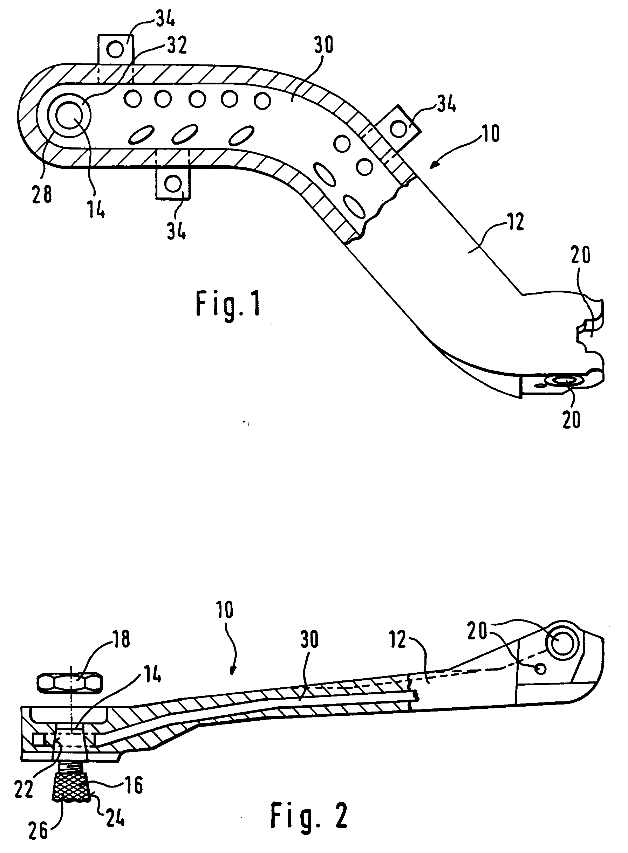

In den Figuren 1 und 2 ist ein Befestigungselement 10 dargestellt, in der Form eines Scheibenwischerarms. Das Befestigungselement 10 weist einen Körper 12 auf, an dessen einer Seite eine Nabe 14 zur Aufnahme einer Achse 16 und eines Spannelements 18 und an dessen anderer Seite Mittel 20 zur Aufnahme weiterer Teile, insbesondere für einen Scheibenwischer, vorgesehen sind. Die Nabe 14 weist einen Innenkonus 22 auf, der im eingebauten Zustand mit einem Außenkonus 24 der Achse korrespondiert. Der Außenkonus 24 besitzt an seiner Oberfläche rändelförmige Rillen 26, die sich bei der Montage, wenn das Spannelement 18, hier eine Mutter, die beiden Konuse ineinander zieht, in das weiche Material des Innenkonuses 22 eindrücken. Auf diese Weise ist ein Durchrutschen des Befestigungselements 10, wenn sich die Achse 16 dreht, vermieden.

Innerhalb des Körpers 12 des Befestigungselements 10 ist ein Verstärkungselement 30 angeordnet, das die Nabe 14 umgibt und im Bereich der Nabe 14 eine Durchbrechung 28 aufweist, die so groß ist, daß zwischen dem Innenkonus 22 und der Durchbrechung 28 ein Wandbereich 32 gebildet ist. Der Wandbereich 32 besteht aus dem gleichen Material wie der Körper 12 und weist eine Dicke von ca. 1,5 mm auf. Dadurch kann sich die Rändel 26 in das weiche Material des Körpers 12 eingraben und die mechanischen Belastungen werden durch das Verstärkungselement 30 aufgefangen.

Das Verstärkungselement 30 weist Fortsätze 34 auf, die sich seitlich bis außerhalb des Körpers 12 erstrecken. Es hat sich gezeigt, daß ca. 3 bis 4 Fortsätze ausreichend sind, wenn sich das Verstärkungselement über die gesamte Länge des Befestigungselements 10 erstreckt. Die aus dem Körper 12 hervorstehenden Bereiche der Fortsätze 34 können entlang der Oberfläche des Körpers 12 entfernt werden, sofern sie im späteren Einsatz störend wirken.

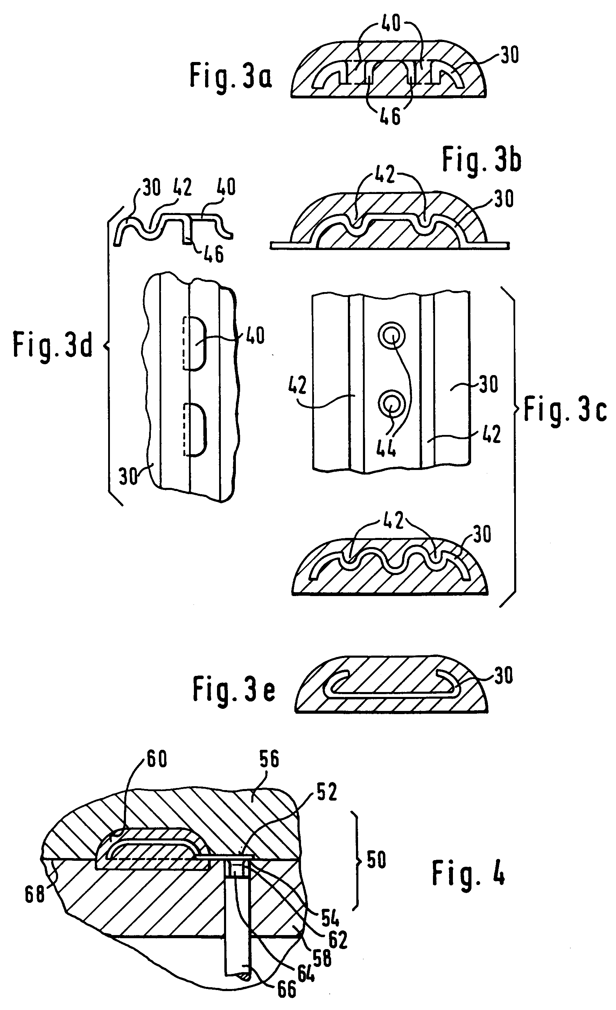

Wie in Figur 3 gezeigt, ist das Verstärkungselement 30 im Querschnitt U-förmig und weist einen oder mehrere Durchbrüche 40, Sicken 42, Dellen 44 auf oder ist ganz oder teilweise am Rand umgebördelt (Figur 3e). Die Durchbrüche 40 können vollständig (Figur 3a) oder teilweise (Figur 3d) mit Kragen 46 umgeben sein. Durch diese Maßnahmen kann einerseits eine Erhöhung der Formstabilität des Verstärkungselements 30 erreicht und andererseits das Schwindungsverhalten während des Herstellungsprozesses des Körpers 12 optimiert werden. Dabei verhindern die Durchbrüche, das im inneren Bereich des U-förmigen Verstärkungselements 30 ein Abschwinden während des Erstarrungsprozesses stattfindet, da eine merkliche Schwindung auch in Querrichtung durch die Durchbrüche hindurch ermöglicht wird. Auf diese Weise wird dem Nachteil begegnet, daß aufgrund des schnellen Herstellungsprozesses der Werkstoff des Körpers 12 keine metallische Verbindung mit dem Werkstoff des Verstärkungselements 30 eingeht.

Als Werkstoffe eignen sich für das Verstärkungselement bevorzugt Werkstoffe mit hoher Zugfestigkeit, wie Stahl oder Stahllegierungen. Für den Werkstoff des Grundkörpers eignen sich Werkstoffe die gut druckgießbar sind, wie beispielsweise Zink oder Aluminium, wobei mit Zink Oberflächen mit besonderer Güte möglich sind und außerdem das Druckgießwerkzeug eine höhere Standzeit erreicht.

Ein erfindungsgemäßes Verfahren zum Herstellen eines Befestigungselements 10 für Scheibenwischer, das einen Körper 12 und ein sich im Körper 12 seelenartig erstreckendes Verstärkungselement 30 aufweist, zeichnet sich durch folgende Schritte aus:
1. Das Verstärkungselement 30, das Fortsätze 34 aufweist, wird in eine Druckgießform 50 eingelegt, wobei die Fortsätze 34 durch Aufnahmen 52, 54 in einer oder beiden Formhälften 56, 58 aufgenommen werden.
2. Beim Schließen der Druckgießform 50, d.h. beim Zusammenfahren der beiden Formhälften 56 und 58, werden die Fortsätze 34 durch die beiden Formhälften 56 und 58 eingeklemmt und somit fest verspannt, wodurch das Verstärkungselement 30 in seiner Lage innerhalb der Druckgießform 50 und innerhalb der Fasson 60 fixiert ist.
3. Der Werkstoff des Körpers 12 wird unter Druck in die Druckgießform 50 eingespritzt und umgibt das Verstärkungselement 30.
4. Die Druckgießform 50 wird geöffnet und das Befestigungselement 10 ausgeworfen.

Durch dieses Verfahren, bei dem insbesondere durch das Zusammenwirken des speziell gestalteten Verstärkungselements 30 als Einlegeteil mit Fortsätzen 34 sowie der die Fortsätze 34 aufnehmenden Druckgießform eine genaue Fixierung des Einlegteils erreicht wird, ist es möglich, das Verstärkungselement auch in lange, dünne Scheibenwischerarme einzubringen. Die Gefahr des Verrutschens des Verstärkungsteils 30 innerhalb des Körpers 12 ist effektiv vermieden.

Beim Einlegen des Verstärkungselements 30 in die Druckgießform 50 gelangen vorzugsweise konische Kragen 62, die an die Fortsätze 34 angebracht sind, in Bohrungen 64 der einen Formhälfte 58 und werden so schnell und sicher zentriert. Die Kragen 62 können durch einfaches Durchdrücken kreisrunder Löcher in den Fortsätzen 34 erzeugt werden.

In den Bohrungen 64 werden Auswerfer 66 geführt, mit denen ein einfaches Auswerfen des erstarrten Befestigungselements 10 ermöglicht wird. Außerdem wird hierdurch sich in der Formtrennung 68 aufgrund des hohen Druckes während des Herstellens ausbreitendes Material, das auch in die als Zentrierung vorgesehenen Bohrungen 64 dringt mit den Auswerfern ausgestoßen. Auf diese Weise wird die Zentrierung ständig gereinigt.

Dem Druckgießvorgang kann ein Abstanzen der über den Körper 12 vorstehenden Bereiche der Fortsätze 34 nachgestellt sein.

Eine erfindungsgemäße Vorrichtung zur Durchführung des Verfahrens weist an einer oder beiden Formhälften 56, 58 der Druckgießform 50 Aufnahmen 52, 54 auf, in die die Fortsätze 34 einlegbar und fixierbar sind. Ferner weist mindestens eine Formhälfte 58 in die Aufnahme 54 mündende Bohrungen 64 auf, in denen Auswerfer 66 geführt sind.

## Patentansprüche

1. Befestigungselement für Scheibenwischer, insbesondere einen Scheibenwischerarm, mit einer konischen Nabe, die mit einer ebenfalls konischen Achse verbindbar ist, wobei mit einem Spannelement die Nabe auf den Konus der Achse drückbar ist, wobei das Befestigungselement mindestens aus einem Körper (12) und einem sich seelenartig darin erstreckend angeordneten Verstärkungselement (30) besteht, welches die Nabe umgibt, dadurch gekennzeichnet, daß im Bereich der Nabe (14) das Verstärkungselement (30) völlig vom Körper (12) umgeben ist, und daß das Verstärkungselement Fortsätze (34) aufweist, die sich bis mindestens zur Oberfläche des Körpers (12) erstrecken.

2. Befestigungselement nach Anspruch 1, dadurch gekennzeichnet, daß sich das Verstärkungselement (30) über die gesamte Länge des Befestigungselements (10) erstreckt.

3. Befestigungselement nach Anspruch 1 oder 2, dadurch gekennzeichnet, daß das Verstärkungselement (30) im Querschnitt U-förmig ist.

4. Befestigungselement nach einem der Ansprüche 1 bis 3, dadurch gekennzeichnet, daß das Verstärkungselement (30) einen oder mehrere Durchbrüche (40) aufweist.

5. Befestigungselement nach Anspruch 4, dadurch gekennzeichnet, daß die Durchbrüche (40) zumindest teilweise von Kragen (46) umgeben sind.

6. Befestigungselement nach einem der vorhergehenden Ansprüche, dadurch gekennzeichnet, daß das Verstärkungselement (30) zur Erhöhung der Formstabilität, Sicken (42), Dellen (44), Bördel oder ähnliche Einbringungen enthält.

7. Befestigungselement nach einem der vorhergehenden Ansprüche, dadurch gekennzeichnet, daß das Verstärkungselement (30) aus einem Werkstoff hoher mechanischer Belastbarkeit besteht und von einem Werkstoff mit guten Formgebungseigenschaften umgeben ist, der den Körper (12) bildet.

8. Befestigungselement nach Anspruch 7, dadurch gekennzeichnet, daß das Verstärkungselement (30) aus Stahl, einer Stahllegierung oder dergleichen und der Körper (12) aus Zink beziehungsweise einer Zinklegierung oder aus Aluminium beziehungsweise einer Aluminiumlegierung besteht.

9. Verfahren zum Herstellen eines Befestigungselementes nach einem der rorherigehenden Ansprüche
gekennzeichnet durch folgende Schritte:
das Fortsätze (34) aufweisende Verstärkungselement (30) wird in eine Druckgießform (50) eingelegt, wobei die Fortsätze (34) durch Aufnahmen (52, 54) in der Druckgießform aufgenommen werden,
die Druckgießform (50) wird geschlossen, wobei das Verstärkungselement (30) über die Fortsätze (34) in seiner Lage durch die geschlossene Druckgießform (50) fixiert wird,
der Werkstoff des Körpers (12) wird unter Druck in die Druckgießform (50) eingespritzt und umgibt das Verstärkungselement (30),
das Befestigungselement (30) wird nach dem Öffnen der Druckgießform ausgeworfen.

10. Verfahren nach Anspruch 9, dadurch gekennzeichnet, daß die Fortsätze (34) vorzugsweise konische Kragen (62) aufweisen, mit denen sie in in die Aufnahmen (52, 54) eingebrachte Bohrungen (64) eingelegt werden.

11. Verfahren nach Anspruch 9 oder 10, dadurch gekennzeichnet, daß in den Bohrungen (64) Auswerfer (66) geführt werden.

12. Verfahren nach einem der Ansprüche 9 bis 11, dadurch gekennzeichnet, daß die aus dem Körper (12) hervorstehenden Fortsätze (34) entfernt, insbesondere abgestanzt werden.

13. Vorrichtung zur Durchführung des Verfahrens nach einem der Ansprüche 9 bis 12, dadurch gekennzeichnet, daß in einer Druckgießform Aufnahmen (52, 54) vorgesehen sind, in die die Fortsätze (34) einlegbar und fixierbar sind.

14. Vorrichtung nach Anspruch 13, dadurch gekennzeichnet, daß in die Aufnahmen (52, 54) Bohrungen (64) münden, in denen Auswerfer (66) geführt sind.

## Claims

1. Fastening element for windscreen wipers, in particular a windscreen wiper arm, having a conical hub which can be connected to a spindle which is likewise conical, the hub being pressable onto the cone of the spindle with a clamping element, the fastening element comprising at least one body (12) and a reinforcing element (30) which is arranged such that it extends in the body in the manner of a core and surrounds the hub, characterized in that in the region of the hub (14) the reinforcing element (30) is completely surrounded by the body (12), and in that the reinforcing element has extensions (34) which extend at least as far as the surface of the body (12).

2. Fastening element according to Claim 1, characterized in that the reinforcing element (30) extends over the entire length of the fastening element (10).

3. Fastening element according to Claim 1 or 2, characterized in that the reinforcing element (30) is U-shaped in cross-section.

4. Fastening element according to one of Claims 1 to 3, characterized in that the reinforcing element (30) has one or more openings (40).

5. Fastening element according to Claim 4, characterized in that the openings (40) are at least partially surrounded by collars (46).

6. Fastening element according to one of the preceding claims, characterized in that the reinforcing element (30) contains beads (42), depressions (44), flanges or similar insertions so as to increase the dimensional stability.

7. Fastening element according to one of the preceding claims, characterized in that the reinforcing element (30) consists of a material of high mechanical loading capacity and is surrounded by a material which has good shaping characteristics and which forms the body (12).

8. Fastening element according to Claim 7, characterized in that the reinforcing element (30) consists of steel, a steel alloy or the like, and the body (12) consists of zinc or a zinc alloy, or of aluminium or an aluminium alloy.

9. Method for the production of a fastening element according to one of the preceding claims, characterized by the following steps:
the reinforcing element (30), which has extensions (34), is placed into a die casting mould (50), the extensions (34) being accommodated by receptacles (52, 54) in the die casting mould,
the die casting mould (50) is closed, the reinforcing element (30) being fixed in its position via the extensions (34) by means of the closed die casting mould (50),
the material of the body (12) is injected under pressure into the die casting mould (50) and surrounds the reinforcing element (30),
the fastening element (30) is ejected after opening of the die casting mould.

10. Method according to Claim 9, characterized in that the extensions (34) preferably have conical collars (62) with which they are placed into holes (64) made in the receptacles (52, 54).

11. Method according to Claim 9 or 10, characterized in that ejectors (66) are guided in the holes (64).

12. Method according to one of Claims 9 to 11, characterized in that the extensions (34), which protrude out of the body (12), are removed, in particular punched off.

13. Device for carrying out the method according to one of Claims 9 to 12, characterized in that receptacles (52, 54) are provided in a die casting mould, into which receptacles the extensions (34) can be placed and fixed.

14. Device according to Claim 13, characterized in that holes (64) open into the receptacles (52, 54), in which holes ejectors (66) are guided.

## Revendications

1. Tête d'entraînement pour essuie-glace, en particulier pour un bras d'essuie-glace comportant un moyeu conique pouvant être relié à un axe également conique, avec application du moyeu sur l'axe par un élément de serrage, l'élément de fixation étant composé au moins d'un corps (12) et d'un élément renforçateur (30) qui y est logé à la manière d'une âme et qui entoure le moyeu,
caractérisée en ce que
l'élément renforçateur (30), dans la zone du moyeu, est entièrement entouré par le corps (12) et présente des appendices (34) allant au moins jusqu'à la surface externe du corps (12).

2. Tête d'entraînement selon la revendication 1,
caractérisée en ce que
l'élément renforçateur (30) s'étend sur toute la longueur de l'élément de fixation (10).

3. Tête d'entraînement selon la revendication 1 ou 2,
caractérisée en ce que
l'élément renforçateur (30) a une section en forme d'U.

4. Tête d'entraînement selon une des revendications 1 à 3,
caractérisée en ce que
l'élément renforçateur (30) est percé d'un ou plusieurs passages (40).

5. Tête d'entraînement selon la revendication 4,
caractérisée en ce que
les passages (40) sont entourés, au moins partiellement, de collets (46).

6. Tête d'entraînement selon l'une des revendications précédentes,
caractérisée en ce que
l'élément renforçateur (30), afin d'accroître sa stabilité de forme, comporte des sillons (42), des bosselages (44), des collets ou des aménagements analogues.

7. Tête d'entraînement selon l'une des revendications précédentes,
caractérisée en ce que
l'élément renforçateur (30) est fait d'un matériau pouvant supporter de fortes contraintes mécaniques, et il est entouré par un matériau ayant une bonne aptitude au moulage, constituant le corps (12).

8. Tête d'entraînement selon la revendication 8,
caractérisée en ce que
l'élément renforçateur (30) est réalisé en acier, en alliage d'acier ou analogue, tandis que le corps est en zinc ou en alliage de zinc, en aluminium ou alliage d'aluminium.

9. Procédé de fabrication d'une tête d'entraînement selon
une des revendications précédentes,
caractérisé
par les étapes suivantes :
- l'élément renforçateur (30) avec ses appendices (34) est introduit dans un moule de coulée sous pression (50), les appendices (34) étant placés dans des logements correspondants (52, 54) du moule,
- le moule de coulée sous pression (50) est fermé, l'élément renforçateur étant maintenu par les appendices (34) en position fixe dans le moule ferméde coulée sous pression,
- le matériau du corps (12) est injecté sous pression dans le moule (50) et vient entourer l'élément renforçateur (30),
- l'élément de fixation (30) est retiré du moule, après ouverture de celui-ci.

10. Procédé de fabrication selon la revendication 9,
caractérisé en ce que
les appendices (34) présentent avantageusement des collets coniques (62) qui viennent s'engager dans des alésages (64) prévus dans les logements (52, 54).

11. Procédé de fabrication selon la revendication 9 ou 10,
caractérisé en ce que
les alésages (64) contiennent et guident des éjecteurs (66).

12. Procédé de fabrication selon l'une des revendications précédentes,
caractérisé en ce que
les appendices faisant saillie sur le corps (12) sont éliminés, en particulier par cisaillage.

13. Dispositif pour la mise en oeuvre du procédé selon une des revendications 9 à 12,
caractérisé en ce qu'
il est prévu dans un moule de coulée sous pression des logements (52, 54) dans lesquels les appendices (34) peuvent être installés et fixés.

14. Dispositif pour la mise en oeuvre du procédé selon la revendication 13,
caractérisé en ce que
dans les logements (52, 54) débouchent des alésages (64) dans lesquels peuvent coulisser des éjecteurs (66).
